**Europäisches Patentamt**

**European Patent Office**

**Office européen des brevets**

(19)

(11) Veröffentlichungsnummer: **0 137 799**
**B1**

(12) **EUROPÄISCHE PATENTSCHRIFT**

(45) Veröffentlichungstag der Patentschrift:
**12.10.88**

(51) Int. Cl.⁴: **G 01 N 1/22**

(21) Anmeldenummer: **84900714.1**

(22) Anmeldetag: **04.02.84**

(86) Internationale Anmeldenummer:
**PCT/DE 84/00032**

(87) Internationale Veröffentlichungsnummer:
**WO 84/03145 (16.08.84 Gazette 84/20)**

(54) **VORRICHTUNG ZUR ENTNAHME VON GASPROBEN AN EINEM BEHÄLTER.**

(30) Priorität: **07.02.83 DE 3304018**

(43) Veröffentlichungstag der Anmeldung:
**24.04.85 Patentblatt 85/17**

(45) Bekanntmachung des Hinweises auf die Patenterteilung:
**12.10.88 Patentblatt 88/41**

(84) Benannte Vertragsstaaten:
**AT BE CH DE FR LI LU NL**

(56) Entgegenhaltungen:
**EP-A-0 081 637**
**GB-A-1 555 772**
**JP-B-56 070 237**
**US-A-3 861 116**

(73) Patentinhaber: **Rheinische Braunkohlenwerke AG.,
Stüttgenweg 2, D-5000 Köln 41 (DE)**

(72) Erfinder: **DALLMANN, Winfried, Florianweg 8,
D-5013 Elsdorf- Etzweiler (DE)**
Erfinder: **MENGE, Franz- Josef, Xantener Str. 133,
D-5000 Köln 60 (DE)**
Erfinder: **SCHUBER, Bernhard, Claudiusstr. 22,
D-4047 Dormagen 1 (DE)**

(74) Vertreter: **Koepsell, Helmut, Dipl.- Ing.,
Mittelstrasse 7, D-5000 Köln 1 (DE)**

## Beschreibung

Die Erfindung betrifft eine Vorrichtung zur Entnahme von Gasproben an einem Schüttgutbehälter mit einem Austragsorgan für das Schüttgut und einem Fühler zur Entnahme der Gasproben.

Viele Schüttgüter, insbesondere staubförmige Schüttgüter, werden in geschlossenen Behältern gelagert und/oder transportiert. Diese Behälter sind mit einem Einfüllstutzen und einem Entleerungsstutzen versehen. Letzterer ist häufig als Zellenradschleuse ausgebildet, die sich besonders für Schüttgüter eignet, die unter inerter Atmosphäre oder anderen besonderen Bedingungen gelagert werden müssen.

Einige Schüttgüter, insbesondere Stäube, neigen zur Selbstentzündung und entwickeln im Zuge der dazu führenden Umsetzungen Gase, die aus dem Schüttgut austreten. Anhand dieser sich entwickelnden Gase kann z. B. auf eine bevorstehende Brandgefahr geschlossen werden. Andere Schüttgüter können nur unter einer inerten Atmosphäre gelagert werden. Hierbei muß sichergestellt sein, daß das inerte Gas stets in ausreichenden Mengen vorhanden ist. Die Messung des Vorhandenseins von aus dem Schüttgut austretenden, eine Brandgefahr anzeigenden Gasen oder von inerten Gasen stößt auf Schwierigkeiten, wenn es sich um die Feststellung dieser Gase im unteren Bereich, insbesondere während der Entleerung des Behälters, handelt. Dieser Bereich ist sehr schwer zugänglich und kann deshalb von Meßsondern bisher nur unzureichend erfaßt werden. Eine weitere Schwierigkeit ergibt sich dadurch, daß bekannte Meßsonden nicht stationär im Behälter angeordnet werden können und somit nur für zeitlich und örtlich eng begrenzte Meßvorgänge geeignet sind.

Aus der JP-PS-5 670 237 ist eine Entnahmevorrichtung für pulverförmige Schüttgüter bekannt, bei welcher zur Messung der Feuchte des Schüttgutes ein Teil des letzteren durch eine Abzweigung der Leitung für den Schüttgutstrom geleitet wird und in dieser Abzweigung ein Fühler zur Messung des Feuchtigkeitsgehaltes des Schüttgutes angeordnet ist. Dabei kommt dieses pulverförmige Material mit der Meßeinrichtung bzw. deren Fühler unmittelbar in Berührung. Dies führt zu einer mechanischen Beanspruchung des Fühlers, die zu Beschädigungen desselben und damit zu Störungen im Betriebsablauf führen kann. Außerdem erfordert das Vorhandensein der Abzweigung besondere Maßnahmen und Mittel, um sicherzustellen, daß zumindest während des Meßvorganges ein Schüttgut-Teilstrom bestimmter Größe durch die Abzweigung geführt wird.

Ferner ist aus der EP-A-0 081 637, veröffentlicht am 22.06.83, eine Entnahme- und Analysiervorrichtung für staubhaltige Gasproben bekannt, bei welcher der Gasentnahmeanschluß in Form einer Beruhigungskammer ausgeführt und der Fühler für die Gasproben außerhalb der Leitung für das Gas angeordnet ist. Fühler und ein Analysegerät sind über eine Abzweigleitung mit der Hauptleitung für das Gas verbunden. Sämtliche für die Entnahme und Analyse erforderlichen Einrichtungen befinden sich innerhalb eines Gehäuses, das jedoch vom Gas nicht durchströmt wird.

Der Erfindung liegt die Aufgabe zugrunde, eine Vorrichtung zur Entnahme von Gasproben an einem Schüttgutbehälter der einleitend beschriebenen Art so auszugestalten, daß sie auch im unteren Bereich und während des Entleerens eines Schüttgutbehälters eingesetzt werden kann, um über einen längeren Zeitraum kontinuierlich Meßwerte zu liefern. Dabei soll eine mechanische Beaufschlagung des Fühlers durch das Schüttgut vermieden werden, um so eine Beeinträchtigung seiner Funktionstüchtigkeit zu vermeiden. Andererseits soll dadurch jedoch die Meßgenauigkeit ebenfalls keine Beeinträchtigungen erfahren.

Die Aufgabe wird durch die Vorrichtung gemäß Anspruch 1 gelöst. Mit einer solchen Vorrichtung kann das Schüttgut in unmittelbarer Nähe des Fühlers vorbeigeführt werden, so daß einerseits die Erzielung einwandfreier Meßdaten möglich ist, andererseits jedoch der Fühler durch das Schüttgut keinerlei mechanische Beanspruchungen erfährt.

Die Vorrichtung gemäß der Erfindung hat sich als besonders vorteilhaft erwiesen bei der Anwendung an Schüttgutbehältern, in denen Stäube, z. B. Kohlenstaub, gelagert sind. Das in dem Kohlenstaub entstandene Gas wird zusammen mit dem Staub ausgetragen und vom Fühler, der selbst nicht in den Schüttgutstrom hineinragt, angesaugt, so daß die Anwesenheit von Gasbestandteilen, die bestimmte Zustände anzeigen, mit Sicherheit festgestellt werden kann, wobei gewährleistet ist, daß der Meßfühler durch das Schüttgut nicht blockert wird. Er bleibt somit während der gesamten Meßdauer wirksam.

Vorteilhaft wird die Nebenkammer, in welcher der Fühler angeordnet ist, außerhalb der die Zellen der Zellenradschleuse begrenzenden Außenwand angeordnet, wobei die die Zellenradschleuse mit der Kammer verbindende Öffnung in dieser Außenwand angebracht ist. So können die Gase frei und ungehindert in die Nebenkammer eintreten.

Der Fühler wird etwas oberhalb - in Austragsrichtung gesehen - der Öffnung zwischen Zellenradwand und Nebenkammer angeordnet. Dies stellt eine Maßnahme dar, um zu vermeiden, daß der Schüttgutstrom mit dem Meßfühler in Berührung kommt. Diese Maßnahme kann noch durch ein Abweisblech unterstützt werden, welches in Richtung auf die Öffnung zwischen Zellenradschleuse und Meßkammer geneigt ist und das Schüttgut daran hindert, in die Nebenkammer einzudringen und sich darin abzulagern.

Als Meßfühler hat sich ein Filterschlauch bewährt, der im wesentlichen aus einem in

Richtung parallel zur Achse des Zellenrades der Schleuse abgewinkelten Rohrende besteht, welches von einem in der axialen Verlängerung des Rohrendes fortgeführten Filterkorb verschlossen ist.

In der Zeichnung ist ein Ausführungsbeispiel der Erfindung dargestellt. Es zeigen:

Fig. 1 einen Ausschnitt aus einem Organ zum Austrag im Schnitt und

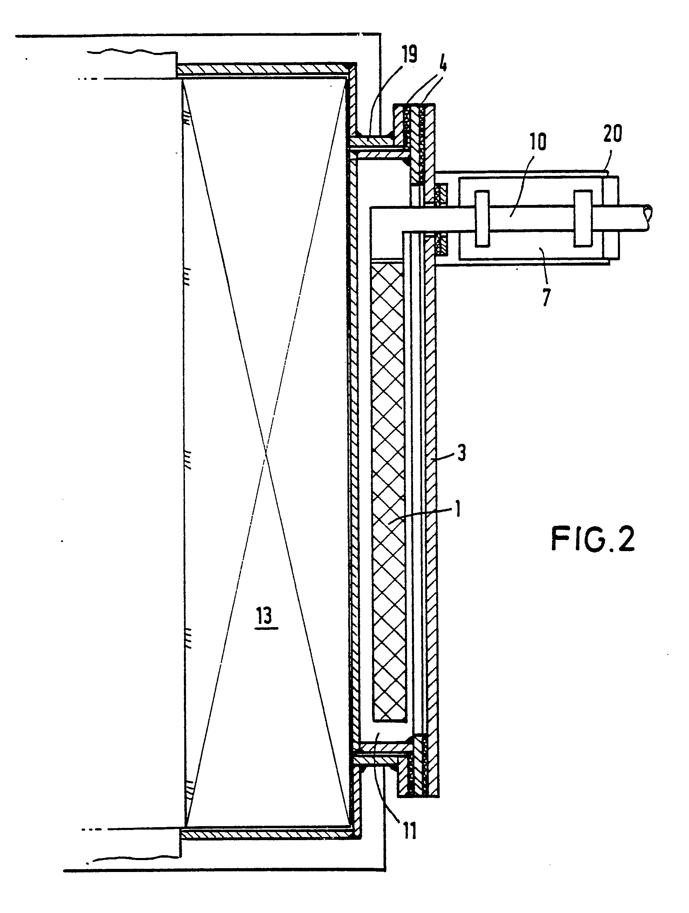

Fig. 2 einen Schnitt nach der Linie II-II der Fig. 1.

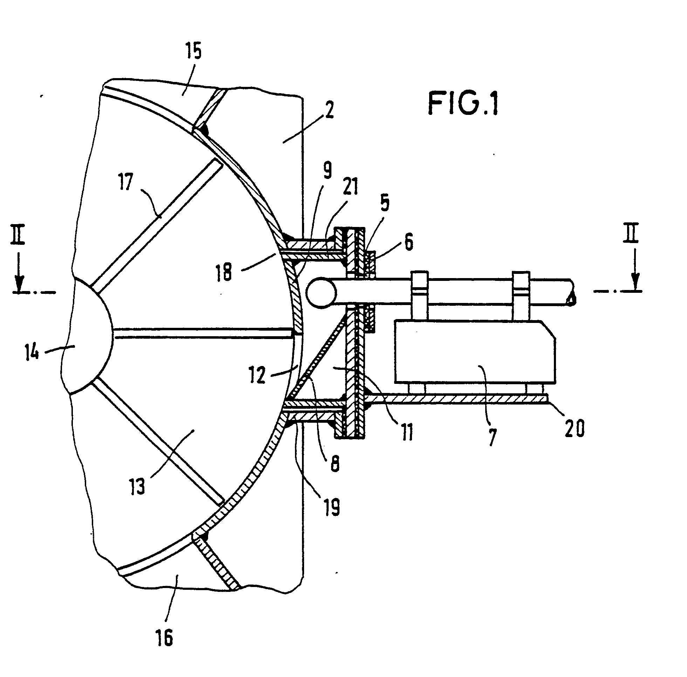

Bei dem in Fig. 1 im Schnitt dargestellten Austragsorgan eines Achüttgutbehälters handelt es sich um eine Zellenradschleuse 2. Die Schleuse besteht aus einem Zellenrad 14, welches in dem Gehäuse der Schleuse 2 drehbar gelagert ist und als Verbindungsglied zwischen dem Auslaßstutzen 15 des Schüttgutbehälters (nicht dargestellt) und einem Auslauf 16 für das Schüttgut angeordnet ist. Zwischen den Flügeln 17 des Zellenrades 14 und dem Gehäuse der Schleuse 2 werden einzelne Zellen 13 gebildet, die unter Drehung des Zellenrades 14 das Schüttgut portionsweise vom Auslaßstutzen 15 zum Auslauf 16 fördern.

Entsprechend der Erfindung ist in die den Umfang des Zellenrades 14 begrenzende Außenwand der Zellenradschleuse 12 eine Öffnung 18 eingebracht, die sich im wesentlichen ununterbrochen über die gesamte axiale Breite des Zellenrades 14 erstreckt. Im Bereich der Öffnung 18 der Gehäusewand der Zellenradschleuse 2 ist ein Flansch 19 vorgesehen, der durch einen Deckel 3 verschlossen ist. Zwischen dem Flansch 19 und dem Deckel 3 sind Dichtungen 4 angeordnet, die die innerhalb des Flansches 19 gebildet Nebenkammer 11 nach außen hin dicht abschließen. Der Deckel 3 ist innenseitig mit einem Fortsatz 21 versehen, der einen in Verlängerung der Schleusenwandung verlaufenen Wandabschnitt 9 trägt, der die Öffnung 18 in der Gehäusewand der Zellenradschleuse 2 teilweise unter Belassung einer Öffnung 12 abschließt, über die das Innere der Nebenkammer 11 mit der Zelle 13 in Verbindung steht. Der Wandabschnitt 9 ist so bemessen, daß eine in diesem Bereich befindliche Zelle 13 umfangsseitig jeweils zwischen dem Auslaßstutzen 15 und der Kammeröffnung 12 mit ausreichender Überdeckung verschlossen ist um zu gewährleisten, daß das Schüttgut aus dem Behälter nicht in die Nebenkammer 11 durchschießen kann.

Am unteren Rand der Öffnung 12 schließt sich ein Abweisblech 8 an, welches schräg unter einem Winkel von etwa 70° nach oben gerichtet in die Nebenkammer 11 hineinragt und seine obere Begrenzung am Deckel 3 oberhalb der oberen Begrenzung der Öffnung 12 findet. Durch das Abweisblech 8 wird die Nebenkammer 11 in zwei annähernd im Querschnitt dreieckförmige Räume unterteilt.

In dem dreieckförmigen Raum oberhalb des Abweisbleches 8 ist ein Meßfühler 1 angeordnet. Dieser Meßfühler besteht aus einem Saugrohr 10, welches durch in im Deckel 3 mit einer Verlängerung in die Nebenkammer 11 hineinragt. Diese Verlängerung ist als Filterschlauch 1 ausgebildet, der gegenüber dem Absaugrohr 10 um einen rechten Winkel abgebogen ist und sich längs durch die Nebenkammer 11 in Richtung parallel zur Achse des Zellenrades 14 erstreckt. Der Filterschlauch erstreckt sich im wesentlichen über den größten Teil der axialen Länge der Schleusenkammer 13. Außerhalb des Deckels 3 ist das Absaugrohr 10 auf einem Vibrator 7 gelagert, der seinerseits auf einer konsolenartigen Verlängerung 20 am Deckel 3 befestigt ist. Die Durchführung des Absaugrohres 10 durch den Deckel 3 ist so ausgebildet, daß die dem Absaugrohr 10 durch den Vibrator 7 erteilten Schwingungen nicht behindert werden und gleichzeitig die Dichtheit der Nebenkammer 11 gewahrt wird. Durch die Anordnung des Filterschlauches 1 im oberen Teil der Nebenkammer 11, d. h. oberhalb der Öffnung 12, und das Vorhandensein des Abweisbleches 8 ist gewährleistet, daß Schüttgut nicht bis an das Filterrohr 1 gelangen kann.

Der Betrieb der Zellenradschleuse 2 wird durch die Anordnung der Kammer 1 nicht beeinträchtigt. Teile des Schüttgutes, die durch die Öffnung 12 in die Nebenkammer 11 eindringen, werden vom Abweisblech 8 durch dessen Schräglage aus der Nebenkammer 11 immer wieder abgeleitet. Hierdurch ist gewährleistet, daß innerhalb der Nebenkammer 11 keine Ansammlung von Schüttgut, welches mit dem Zellenrad 14 transportiert wird, entsteht, so daß an der Meßeinrichtung 1 ständig frisches Schüttgut vorbeigeführt wird. Über das Absaugrohr 10 wird der Filterschlauch 1 mit einem Unterdruck beaufschlagt, wodurch Gase aus dem Schüttgut angesaugt und über das Absaugrohr 10 einer Meßeinrichtung zugeführt werden können. Diese hier nicht dargestellte Meßeinrichtung analysiert sodann die im Schüttgut vorhandenen Gase und deren Zusammensetzung. Aus dieser Analyse werden Erkenntnisse über den Zustand des Schüttgutes bzw. dessen Inertisierungsphase gewonnen. Anstelle der vorgesehenen Reinigung des Filterschlauches 1 durch Schütteln mit dem Vibrator 7 kann dessen Reinigung auch pneumatisch erfolgen, indem er über das Ansaugrohr 10 mit einem entgegengerichteten Gas- oder Luftstrom beaufschlagt wird. Die Reinigung kann mit Hilfe des Vibrators kontinuierlich, d. h. sogar während des Meßbetriebes durchgeführt werden; sie kann aber auch nach jedem Meßvorgang pneumatisch mit Luft oder Inertgas erfolgen, oder der Filterschlauch kann abgeklopft werden.

Durch den Vibrator 7 ist gewährleistet, daß feine Staubteilchen, die sich am Filterrohr 1 insbesondere bei der Messung von staubförmigen Schüttgütern ansetzen, ständig abgeschüttelt werden, so daß der Filterschlauch 1 nicht verstopft.

**Patentansprüche**

1. Vorrichtung zur Entnahme von Gasproben an einem Schüttgutbehälter mit einem Austragsorgan für das Schüttgut und einem Fühler (10) zur Entnahme von Gasproben, der in einer Nebenkammer (11) angeordnet ist, dadurch gekennzeichnet, daß der Fühler (10) außerhalb des Austragsorgans (2) in der Nebenkammer (11), die über eine Öffnung (12) mit dem Austragsorgan (2) in Verbindung steht, so angeordnet ist, daß der Fühler (10) von dem vorbeigeführten Schüttgutstrom nicht beaufschlagt wird.

2. Vorrichtung nach Anspruch 1, dadurch gekennzeichnet, daß das Austragsorgan als Zellenradschleuse (2) ausgebildet und die Öffnung (12) in der die Zellen (13) begrenzenden Außenwand (9) der Schleuse (2) angeordnet ist.

3. Vorrichtung nach Anspruch 1, dadurch gekennzeichnet, daß der Fühler (10) oberhalb der Öffnung (12) in der Nebenkammer (11) angeordnet und die Nebenkammer (11) unterhalb des Fühlers (10) mit einem Abweisblech (8) versehen ist.

4. Vorrichtung nach einem der vorhergehenden Ansprüche, dadurch gekennzeichnet, daß der Fühler als Filterschlauch (1) ausgebildet ist.

5. Vorrichtung nach Anspruch 4, dadurch gekennzeichnet, daß dem Fühler (10) eine Schütteleinrichtung (7) und ein Absaugrohr zugeordnet sind.

**Claims**

1. Apparatus for taking gas samples from a container for bulk material having a member for the discharge thereof and a sensor (10) for taking gas samples, the sensor being arranged in a secondary chamber (11), characterised in that the sensor (10) is arranged outside the discharge member (2) in the secondary chamber (11) which is communicated with the discharge member (2) by way of an opening (12), in such a way that the sensor (10) is not acted upon by the flow of bulk material flowing therepast.

2. Apparatus according to claim 1 characterised in that the discharge member is in the form of a cell wheel control valve (2) and the opening (12) is arranged in the outside wall (9) of the control valve (2), which delimits the cells (13).

3. Apparatus according to claim 1 characterised in that the sensor (10) is arranged above the opening (12) in the secondary chamber (11) and the secondary chamber (11) is provided with a deflector plate (8) below the sensor (10).

4. Apparatus according to one of the preceding claims characterised in that the sensor is in the form of a filter hose (1).

5. Apparatus according to claim 4 characterised in that a shaker means (7) and a suction pipe are associated with the sensor (10).

**Revendications**

1. Dispositif de prélèvement d'échantillons de gaz sur un récipient contenant des matières en vrac, comportant un organe de distribution de la matière et un capteur (10) d'échantillons de gaz monté dans une chambre latérale (11), caractérisé en ce que le capteur (10) est disposé en dehors de l'organe de distribution (2) dans la chambre latérale (11) qui communique par une ouverture (12) avec l'organe de distribution, de manière telle que le capteur (10) ne se trouve pas atteint par le courant de matière qui passe en regard de sa position.

2. Dispositif selon la revendication 1, caractérisé en ce que l'organe de distribution est constitué par un distributeur (2) à roue alvéolée, et en ce que l'ouverture (12) est ménagée dans la paroi extérieure (9) du corps du distributeur (2) qui délimite les alvéoles (13) de celui-ci.

3. Dispositif selon la revendication 1, caractérisé en ce que le capteur (10) est monté au-dessus du niveau de l'ouverture (12) dans la chambre latérale (11), et en ce que la chambre latérale (11) est pourvue d'un déflecteur en tôle (8) monté en- dessous du capteur.

4. Dispositif selon l'une des revendications 1 à 3, caractérisé en ce que le capteur est constitué par un élément tubulaire filtrant (1).

5. Dispositif selon la revendication 4, caractérisé en ce qu'il comporte un système de vibreur (7) et un tube d'aspiration qui sont associés au capteur (10).

FIG.1

FIG.2